# EUROPEAN PATENT APPLICATION

(11) **EP 4 425 609 A1**
(43) Date of publication of application: **04.09.2024**
(21) Application number: 22886433.6
(22) Date of filing: 25.08.2022
(51) Int. Cl.: H01M 4/38, C01B 32/05, C01B 33/00, H01M 4/36

(54) **COMPOSITE ACTIVE MATERIAL FOR SECONDARY BATTERY, AND SECONDARY BATTERY**

(30) Priority: 25.10.2021 JP 2021173871
(71) Applicant: DIC Corporation, Tokyo 174-8520 (JP)
(72) Inventor: ZHU Peixin, Sakura-shi, Chiba 285-8668 (JP); KAWASE Kenichi, Sakura-shi, Chiba 285-8668 (JP); TAKEDA Kotaro, Sakura-shi, Chiba 285-8668 (JP)
(74) Representative: Schön, Christoph
(86) International application number: PCT/JP2022/031974
(87) International publication number: WO 2023/074099

(57) **Abstract**

An object of the present invention is to provide a composite active material for a secondary battery with the initial coulombic efficiency and the capacity retention rate of a negative electrode active material improved and a secondary battery containing the composite active material for a secondary battery. The composite active material for a secondary battery according to the present invention has silicon particles with an average particle size of 150 nm or less, a matrix phase in which the silicon particles are dispersed, and a silicate compound of at least one metal selected from the group consisting of Li, K, Na, Ca, Mg, and Al and has the silicate compound in a near-surface of the silicon particles. The silicate concentration in the near-surface of the silicon particles is preferably higher than the silicate concentration in the matrix phase. The composite active material for a secondary battery preferably further has silicon dioxide in the near-surface of the silicon particles.

## Description

### Technical Field

The present invention relates to a composite active material for a secondary battery and a secondary battery. More specifically, the present invention relates to a composite active material for a secondary battery and a secondary battery containing the composite material for a secondary battery in a negative electrode.

### Background Art

Nonaqueous electrolyte secondary batteries are used in portable devices, hybrid vehicles, electric vehicles, and household storage batteries and are required to have a good balance of multiple characteristics including electric capacity, safety, and operational stability. As such secondary batteries, various types of lithium-ion batteries have been mainly developed and also put to practical use, containing, as negative electrode active materials, lithium intercalation compounds that can absorb and release lithium ions between the layers between crystal planes during charging and discharging.

In recent years, with the miniaturization of various electronic devices and communication devices and the rapid spread of hybrid vehicles, there have been a strong demand for the development of lithium-ion batteries with higher capacity and further improved various battery characteristics such as cycle characteristics and discharge rate characteristics as power sources for driving these devices and the like.

However, graphite or the like is mainly used as the negative electrode active material in conventional lithium-ion batteries, and the theoretical specific capacity of graphite-based negative electrode materials limits the development of lithium-ion batteries with even higher energy density. Given these circumstances, the development of negative electrode materials using metals such as silicon and tin, which are elements having high theoretical capacity and can absorb and release lithium ions, or alloys with other elements, is being considered.

Among them, silicon, which has a theoretical capacity 10 times or more higher than the theoretical capacity of graphite-based negative electrode materials, and silicon-containing active materials are attracting attention. However, silicon-containing active materials are known to have low initial efficiency.

For the purpose of improving the initial efficiency of the silicon-containing active materials, negative electrode active materials containing Li compounds and silicon-containing active materials are being considered.

For example, PTL 1 describes lithium-doped layered silicon by a method of bringing a lithium complex solution in which metallic lithium and a polycyclic aromatic compound are dissolved in an organic solvent into contact with layered polysilane and doping the layered polysilane with lithium.

As silicon oxide doped with Mg, which is a metal other than Li, PTL 2 discloses a negative electrode active material containing silicon particles with a crystal size of 1 to 25 nm and MgSiO₃ crystals within a silicon oxide and containing a silicon compound containing a carbon film on the surface. PTL 3 describes a negative electrode active material including a silicon oxide composite containing a silicon oxide and magnesium silicate and a carbon coating layer positioned on the surface of the silicon oxide composite and containing a carbon-based substance.

Furthermore, as a silicate compound containing both Li and Mg, PTL 4 discusses a negative electrode active material in which silicon compound particles contain a Li compound, containing a salt of polyacrylic acid or a salt of carboxymethylcellulose, and containing a metal salt containing at least one metal selected from Mg and Al.

### Citation List

### Patent Literature

PTL 1: Japanese Unexamined Patent Application Publication No. 2019-202914
PTL 2: Japanese Unexamined Patent Application Publication No. 2018-156922
PTL 3: Japanese Unexamined Patent Application Publication (Translation of PCT Application) No. 2020-529709
PTL 4: Japanese Unexamined Patent Application Publication No. 2018-60771

### Summary of Invention

### Technical Problem

When the silicon-containing active material is used as the negative electrode active material, lithium and silicon oxide present in the silicon-containing active material react with each other to form a lithium oxide during initial charging. The formed lithium oxide cannot be reversibly returned to a positive electrode during discharging. It is thought that lithium is lost by such an irreversible reaction, and initial charge-discharge efficiency is reduced.

The methods described in PTL 1 to 4 attempt to inhibit the reaction between lithium and silicon oxide in the initial stage by containing Li or Mg in silicon oxide present in the silicon-containing active material, thereby inhibiting the reduction in the initial charge-discharge efficiency.

However, the negative electrode active materials in PTL 1 to 4 are considered to have Li and/or Mg metal silicate compounds dispersed throughout the silicon-containing active material, which is still insufficient to inhibit the reaction between lithium and silicon oxide in the initial stage.

In addition, Li and Mg silicates generally have strong water absorbency, and thus aggregation of the negative electrode active material is likely to occur in the preparation of an aqueous slurry for negative electrode film production.

Consequently, lithium secondary batteries containing the negative electrode active materials of PTL 1 to 4 are insufficiently effective in improving initial coulombic efficiency and a capacity retention rate.

The inventors of the present invention have studied methods to efficiently inhibit the formation of the lithium oxide formed during initial charging and discharging to find a composite active material for a secondary battery improving the initial coulombic efficiency and the capacity retention rate of the negative electrode active material.

That is, the present invention relates to a composite active material for a secondary battery used in lithium-ion secondary batteries and a secondary battery containing the composite active materials for a secondary battery as a negative electrode active material, and an object thereof is to provide a negative electrode active material for a secondary battery giving a secondary battery excellent in initial coulombic efficiency and a capacity retention rate. Solution to Problem

The present invention has the following aspects:
[1] A composite active material for a secondary battery including silicon particles with an average particle size of 150 nm or less, a matrix phase in which the silicon particles are dispersed, and a silicate compound of at least one metal selected from the group consisting of Li, K, Na, Ca, Mg, and Al, the composite active material having the silicate compound in a near-surface of the silicon particles.
[2] The composite active material for a secondary battery according to [1] above, in which a silicate concentration in the near-surface of the silicon particles is higher than a silicate concentration in the matrix phase.
[3] The composite active material for a secondary battery according to [1] or [2] above, further having silicon dioxide in the near-surface of the silicon particles.
[4] The composite active material for a secondary battery according to [3] above, in which a molar ratio of the silicon dioxide is 0.9 or less with a total amount by mole of the silicate compound and the silicon dioxide as 1.
[5] The composite active material for a secondary battery according to any one of [1] to [4] above, in which the silicate compound is a magnesium silicate compound.
[6] The composite active material for a secondary battery according to [5] above, in which the magnesium silicate compound in the near-surface of the silicon particles is a crystalline film with a thickness of 0.2 nm to 10 nm.
[7] The composite active material for a secondary battery according to any one of [1] to [6] above, in which the matrix phase contains at least a compound represented by SiOxCyNz (where 1 < x < 2, 1 < y < 20, and 0 < z < 0.5).
[8] The composite active material for a secondary battery according to any one of [1] to [7] above, in which the silicon particles are flake-like crystals, and a crystallite size obtained from a peak with 2θ of 28.4° in an X-ray diffraction spectrum is 25 nm or less.
[9] The composite active material for a secondary battery according to any one of [1] to [8] above, in which the composite active material has an average particle size of 1 um to 15 um and a specific surface area of 1 m²/g to 30 m²/g.

The present invention also has the following aspect:
A secondary battery containing the composite active material for a secondary battery according to any one of [1] to [9] above in a negative electrode.

### Advantageous Effects of Invention

The present invention provides a negative electrode active material for a secondary battery giving a secondary battery excellent in initial coulombic efficiency and a capacity retention rate.

### Description of Embodiments

The composite active material for a secondary battery according to the present invention (hereinafter also referred to as the "present active material") includes silicon particles with an average particle size of 150 nm or less (hereinafter also referred to as the "present silicon particles"), a matrix phase in which the silicon particles are dispersed, and a silicate compound of at least one metal selected from the group consisting of Li, K, Na, Ca, Mg, and Al, the composite active material having the silicate compound in a near-surface of the silicon particles.

It is thought that a silicon oxide film is present on the surfaces of the silicon particles, and it is thought that the formation of a lithium oxide by the reaction between lithium and silicon oxide during initial charging occurs near silicon oxide. It is thought that the present active material can efficiently inhibit the formation of the lithium oxide by causing the silicate compound of at least one metal selected from the group consisting of Li, K, Na, Ca, Mg, and Al to be present in a large amount near the surfaces of the silicon particles. It is thought that consequently when the present active material is used as a negative electrode active material, the initial coulombic efficiency and the capacity retention rate of the negative electrode active material improve.

The present silicon particles include zero-valent silicon and have an average particle size of 150 nm or less.

The average particle size is a D50 value that can be measured using a laser diffraction particle size analyzer or the like. D50 can be measured by dynamic light scattering using a laser particle size analyzer or the like. The average particle size of the present silicon particles is the particle size at which accumulation is 50% when a cumulative volume distribution curve is drawn from the small size side in a particle size distribution.

The silicon particles with a large size exceeding 300 nm form large lumps, easily cause a pulverization phenomenon during charging and discharging when the present active material is made into the negative electrode active material, and thus tend to reduce the capacity retention rate of the negative electrode active material. On the other hand, the silicon particles with a small size less than 10 nm are extremely fine, and thus the silicon particles easily aggregate with each other. Thus, the dispersibility of the silicon particles in the negative electrode active material may be reduced. If the silicon particles are too fine, their surface active energy increases and more by-products or the like tend to be on the surfaces of the silicon particles by high-temperature firing of the negative electrode active material. These may lead to a reduction in charge-discharge performance.

Thus, it is preferable that the present silicon particles contain as small a proportion as possible of large silicon particles greater than 300 nm and small silicon particles less than 10 nm.

From the above viewpoint, the average particle size is preferably 120 nm or less and more preferably 100 nm or less. The average particle size is preferably 20 nm or more and more preferably 30 nm or more.

The present silicon particles can be obtained by, for example, making silicon lumps particles by pulverization or the like such that the average particle size is within the above range.

Examples of pulverizers for use in the pulverization of silicon lumps include pulverizers such as ball mills, bead mills, and jet mills. Pulverization may be wet pulverization using an organic solvent, and as the organic solvent, for example, alcohols, ketones, and the like are suitably used, and aromatic hydrocarbon-based solvents such as toluene, xylene, naphthalene, and methyl naphthalene can also be used.

The average particle size of the present silicon particles can be made within the above range by, for example, classifying the resulting silicon particles by controlling a bead particle size, a blending ratio, and bead mill conditions such as the number of revolutions and a pulverization time.

The present silicon particles may be granular, needle-like, or flake-like in shape so long as they are in a range meeting the above average particle size, but flake-like silicon particles are preferred from the viewpoint of handling. When the present silicon particles are flake-like, a crystallite size obtained from a peak full width at half maximum at 2θ of 28.4 degrees in an X-ray diffraction spectrum of 35 nm or less is preferred from the viewpoint of the initial coulombic efficiency and the capacity retention rate. The crystallite size is more preferably 25 nm or less.

The present silicon particles preferably have a length in the long axis direction of 70 to 300 nm and a thickness of 15 to 70 nm from the viewpoint of the charge-discharge performance when they are made into the negative electrode active material. From the viewpoint of the charge-discharge performance when they are made into the negative electrode active material, they preferably have what is called an aspect ratio, which is the ratio of thickness to length, of 0.5 or less.

As to the morphology of the present silicon particles, their average particle size can be measured by dynamic light scattering. By using analytic means such as a transmission electron microscope (TEM) or a field emission scanning electron microscope (FE-SEM), a sample with the above aspect ratio can be identified more easily and precisely. In the case of the negative electrode active material containing the material for a secondary battery according to the present invention, a sample can be cut with a focused ion beam (FIB), and its section can be observed with an FE-SEM, or the sample can be sliced to identify the state of the present silicon particles by TEM observation.

The aspect ratio of the present silicon particles is a calculation result based on 50 particles in a main part of the sample within the field of view in a TEM image.

The present silicon particles are dispersed in the matrix phase. Examples of the compound forming the matrix phase include silicon dioxide and titanium oxide. Compounds containing silicon, oxygen, and carbon are preferred, and the compounds containing silicon, oxygen, and carbon are preferably a structure including a three-dimensional network structure of a silicon-oxygen-carbon skeleton and free carbon. The free carbon is carbon that is not included in the silicon-oxygen-carbon three-dimensional skeleton. The free carbon includes carbon present as a carbon phase, carbon as carbons bonded together in the carbon phase, and carbon as carbons bonded between the silicon-oxygen-carbon skeleton and the carbon phase.

When the compound forming the matrix phase is the compound containing silicon, oxygen, and carbon and is the structure including the three-dimensional network structure of the silicon-oxygen-carbon skeleton and the free carbon, the silicon-oxygen-carbon skeleton in the matrix phase has high chemical stability and has a composite structure with the free carbon, thereby facilitating diffusion of lithium ions along with a reduction in electronic transition resistance. The present silicon particles are densely surrounded by the composite structure of the silicon-oxygen-carbon skeleton and the free carbon, thus hindering direct contact between the present silicon particles and an electrolyte. Consequently, when the present active material is made into a negative electrode, while the present silicon particles in the negative electrode serve as the main component for exhibiting the charge-discharge performance, the chemical reaction between silicon and the electrolyte is avoided during charging and discharging, so that performance degradation of the present silicon particles can be prevented to the maximum extent.

When the compound forming the matrix phase has the structure including the three-dimensional network structure of the silicon-oxygen-carbon skeleton and the free carbon, in the silicon-oxygen-carbon skeleton, the electron distribution inside the silicon-oxygen-carbon skeleton fluctuates by the approach of lithium ions, and electrostatic bonds, coordination bonds, and the like are formed between the silicon-oxygen-carbon skeleton and lithium ions. Owing to these electrostatic bonds or coordination bonds, lithium ions are stored in the silicon-oxygen-carbon skeleton. Meanwhile, the coordination bond energy is relatively low, and thus the desorption reaction of lithium ions is easily performed. In other words, it is thought that the silicon-oxygen-carbon skeleton can reversibly cause the insertion and desorption reactions of lithium ions during charging and discharging.

When the compound forming the matrix phase is the compound containing silicon, oxygen, and carbon, the matrix phase preferably contains a compound represented by Formula (1) below:

SiOxCy (1)

In Formula (1), x represents the molar ratio of oxygen to silicon and y represents the molar ratio of carbon to silicon.

From the viewpoint that the balance between the charge-discharge performance and the capacity retention rate becomes predominant when the present active material is used in a secondary battery, 1 ≤ x < 2 is preferred, 1 ≤ x ≤ 1.9 is more preferred, and 1 ≤ x ≤ 1.8 is even more preferred.

From the viewpoint of the balance between the charge-discharge performance and the initial coulombic efficiency when the present active material is used in a secondary battery, 1 ≤ y ≤ 20 is preferred, and 1.2 ≤ y ≤ 15 is more preferred.

The compound forming the matrix phase may contain nitrogen apart from silicon, oxygen, and carbon. Nitrogen can be introduced into the matrix phase by causing raw materials used in a method for producing the present active material described below, such as phenolic resins, dispersants, polysiloxane compounds, and other nitrogen compounds, and nitrogen gas or the like used in a firing process to have an atomic group containing nitrogen as a functional group in their molecules. The matrix phase containing nitrogen tends to be excellent in the charge-discharge performance and the capacity retention rate when the present active material is made into the negative electrode active material.

When the compound forming the matrix phase is the compound containing silicon, oxygen, carbon, and nitrogen, the matrix phase preferably contains a compound represented by Formula (2) below:

SiOxCyNz (2)

In Formula (2), x and y have the same meaning as above, and z represents the molar ratio of nitrogen to silicon.

When the matrix phase contains the compound represented by Formula (2) above, from the viewpoint of the charge-discharge performance and the capacity retention rate when the present active material is used in a secondary battery, 1≤ x ≤ 2, 1 ≤ y ≤ 20, and 0 < z ≤ 0.5 are preferred, and 1 ≤ x ≤ 1.9, 1.2 ≤ y ≤ 15, and 0 < z ≤ 0.4 are more preferred.

The above x, y and z can be determined by measuring the mass content of each element and then converting it to molar ratio (atom number ratio). In this process, the contents of oxygen and carbon can be determined by using an inorganic element analyzer, and the content of silicon can be determined by using an ICP optical emission spectrometer (ICP-OES) .

It is preferable to measure x, y, and z by the methods described above, but it is also possible to measure them by performing a local analysis of the present active material and acquiring many measurement points of content ratio data obtained thereby to analogize the content ratio of the entire present active material. Examples of the local analysis include energy dispersive X-ray spectroscopy (SEM-EDX) and an electron probe microanalyzer (EPMA).

In addition to the present silicon particles and the matrix phase, the present active material has a silicate compound of at least one metal selected from the group consisting of Li, K, Na, Ca, Mg, and Al (hereinafter also referred to as the "present silicate compound") in a near-surface of the present silicon particles.

The silicate compound is generally an anion-containing compound having a structure centered around one or a few silicon atoms, which are surrounded by electronegative ligands, but the present silicate compound is a salt of at least one metal selected from the group consisting of Li, K, Na, Ca, Mg, and Al and the anion-containing compound.

As the anion-containing compound, silicate ions are known, such as an orthosilicate ion (SiO₄⁴⁻), a metasilicate ion (SiO₃²⁻) , a pyrosilicate ion (Si₂O₇⁶⁻), and a cyclic silicate ion (Si₃O₉⁶⁻ or Si₆O₁₈¹²⁻). The present silicate compound is preferably a silicate compound that is a salt of the metasilicate ion and at least one metal selected from the group consisting of Li, K, Na, Ca, Mg, and Al. Among the metals, Li or Mg is preferred.

The present silicate compound has at least one metal selected from the group consisting of Li, K, Na, Ca, Mg and Al and may have two or more of these metals. When it has two or more metals, one silicate ion may have a plurality of metals or it may be a mixture of silicate compounds having different metals. The present silicate compound may also have other metals so long as it has at least one metal selected from the group consisting of Li, K, Na, Ca, Mg and Al.

The present silicate compound is preferably a lithium silicate compound or a magnesium silicate compound, more preferably lithium metasilicate (Li₂SiO₃) or magnesium metasilicate (MgSiO₃), and particularly preferably magnesium metasilicate (MgSiO₃).

The present active material has the silicate compound in the near-surface of the present silicon particles. That is, the present silicate compound may chemically or physically bond directly with the surfaces of the present silicon particles, and the present silicate compound may be present in the near-surface of the present silicon particles. The near-surface of the present silicon particles is within, for example, 10 nm of the surfaces and preferably within 5 nm.

From the viewpoint of efficiently inhibiting the formation of the lithium oxide, the present silicate compound is preferably present in a large amount in the near-surface of the present silicon particles, 50% by mass or more of the entire mass of the present silicate compound contained in the present active material is more preferably present in the near-surface, and 60% by mass or more thereof is even more preferably present in the near-surface.

The presence of the present silicate compound in the near-surface of the present silicon particles can be confirmed with a high-resolution transmission electron microscope (hereinafter also referred to as an "HR-TEM"). Details can be confirmed by slicing a sample with a focused ion beam (FIB) and observing it with the HR-TEM.

The concentration of the present silicate compound in the near-surface of the present silicon particles (a silicate concentration) is preferably higher than the concentration of the compound forming the matrix phase (a silicate concentration). The near-surface is as described above, and the concentration of the present silicate compound in the near-surface of the silicon particles (the silicate concentration) is the concentration of the present silicate compound in the above range. For example, the concentration of the present silicate compound in the near-surface (the silicate concentration) is the mass of the present silicate compound in the above range per unit volume.

When the present silicate compound is in a crystalline state, the lattice structure of the crystallites of the present silicate compound is observed in the above HR-TEM measurement. Thus, the concentration of the present silicate compound in the near-surface of the present silicon particles is the ratio of the area of the lattice structure attributed to the crystallites of the silicate compound per unit area to the area of the entire field of view in a 1,000,000-power observation field of view of the HR-TEM and is calculated by the following expression. Area ratio = area of lattice structure attributed to crystallites/area of entire field of view

This area ratio is determined using the average of five or more different fields of view.

The concentrations of an Mg element, an Si element, and an O element present near the silicon particles can be detected in a mapping image using scanning transmission electron microscope energy-dispersive-spectroscopy (STEM-EDS). The concentration of the silicate compound can be determined with the Mg element, the Si element, and the O element combined with each other.

The concentration of the present silicate compound in the near-surface (the silicate concentration) is preferably double the concentration of the compound forming the matrix phase (the silicate concentration) and more preferably three times. It is even more preferable that the present silicon particles be covered with the present silicate compound.

When the concentration of the present silicate compound and the concentration of the compound forming the matrix phase are compared with each other within the range of the near-surface of the silicon particles using the HR-TEM, the area of the lattice structure of the silicate compound crystallites in the near-surface of the present silicate compound is preferably double or more and more preferably three times or more of the area of the crystal lattice structure of the compound forming the matrix phase per unit area of the observation field of view.

When the present silicate compound is a magnesium silicate compound, it is preferable that the magnesium silicate compound be a crystalline film and cover at least part of the surfaces of the present silicon particles. When the magnesium silicate compound covers at least part of the surfaces of the present silicon particle, the coverage is more preferably 50% or more and particularly preferably 80% or more. When the magnesium silicate compound covers at least part of the present silicon particles, the thickness of the crystalline film is preferably 0.2 nm to 10 nm and more preferably 1 nm to 8 nm. The coverage and the thickness of the crystalline film can be measured by the HR-TEM. The coverage can be determined from the amount ratio between the silicon particles and the magnesium silicate compound.

The present active material preferably has silicon dioxide apart from the silicate compound in the near-surface of the present silicon particles from the viewpoint of being excellent in the balance between the initial coulombic efficiency and the capacity retention rate.

When the present active material has silicon dioxide, the present silicate compound and silicon dioxide are present in the near-surface of the present silicon particles. As to the molar ratio between the present silicate compound and silicon dioxide, the molar ratio of silicon dioxide is preferably 0.9 or less and more preferably 0.5 or less with the total amount by mole of the present silicate compound and silicon dioxide as 1. As to the molar ratio between the present silicate compound and silicon dioxide, the molar ratio of silicon dioxide is preferably 0.05 or more and more preferably 0.1 or more with the total amount by mole of the present silicate compound and silicon dioxide as 1.

When the present active material has silicon dioxide, the surfaces of the present silicon particles are preferably covered with a silicon dioxide film, which is an oxide film of silicon. When the surfaces of the present silicon particles are covered with the silicon dioxide film, the present silicate compound is preferably present on the surface of the silicon dioxide film. When the silicate compound is the crystalline film of the magnesium silicate compound, the silicon dioxide film covering the present silicon particles is preferably further covered with the crystalline film of the magnesium silicate compound.

The average particle size of the present active material having the present silicon particles, the matrix phase, and the present silicate compound in the near-surface of the present silicon particles is preferably 1 um to 15 um and more preferably 2 um to 8 um. The average particle size is a D50 value, which is the same as described above, and the method of measurement is also the same as described above.

If the average particle size is too small, along with a significant increase in the specific surface area, when the present active material is made into a secondary battery, the amount of a solid phase interface electrolyte decomposed product (hereinafter, also referred to as "SEI") generated during charging and discharging increases, and thereby reversible charge-discharge capacity per unit volume may decrease. If the average particle size is too large, the present active material may delaminate from a current collector during electrode film production.

The specific surface area of the present active material is preferably 1 m²/g to 30 m²/g and more preferably 2 m²/g to 15 m²/g. When the specific surface area is in the above range, the amount of a solvent absorbed during electrode production can be maintained at an appropriate level, and the amount of a binding agent used to maintain bindability can also be maintained at an appropriate level. The specific surface area is a value obtained by the BET method, can be determined by nitrogen gas adsorption measurement, and can be measured using, for example, a specific surface area measurement apparatus.

The average particle size of the present active material is more preferably 1 um to 15 um and the specific surface area thereof is more preferably 1 m²/g to 30 m²/g. The average particle size of the present active material is particularly preferably 2 um to 8 um and the specific surface area thereof is particularly preferably 2 m²/g to 15 m²/g.

The present active material may contain another necessary third component apart from the above.

The surface of the present active material may be covered with a covering material. As the covering material, preferred is a substance that can be expected to have electron conductivity, lithium ion conductivity, and the effect of inhibiting electrolyte decomposition.

When the surface of the present active material is covered with the covering material, the average thickness of a covering layer is preferably 10 nm or more and 300 nm or less. The average thickness is more preferably 20 nm or more and 200 nm or less. The present active material having the covering layer with the above average thickness can protect the present silicon particles exposed on the surface of the present active material, by which when the present active material is used as the negative electrode active material, the chemical stability and thermal stability of the negative electrode active material are improved. Consequently, the reduction in the charge-discharge performance of the secondary battery to be obtained can be further inhibited.

When the surface of the present active material is covered with the covering material, from the viewpoint of improving the chemical stability and thermal stability of the negative electrode active material, the content of the covering material is preferably 1 to 30% by mass and more preferably 3 to 25% by mass with the entire amount of the present active material as 100% by mass. The entire amount of the present active material is the total amount of the present silicon particles, the matrix phase, the present silicate compound, and the covering material included in the present active material. When the matrix phase contains nitrogen, the total amount includes nitrogen as well.

Examples of the covering material include electron conductive materials such as carbon, titanium, and nickel. Among these, from the viewpoint of improving the chemical stability and thermal stability of the negative electrode active material, carbon is preferred, and low crystalline carbon is more preferred.

When the covering material is low crystalline carbon, the average thickness of the covering layer is preferably 10 nm or more and 300 nm or less, or the content of low crystalline carbon is preferably 1 to 30% by mass with the entire amount of the present active material as 100% by mass.

The present active material is excellent in charge-discharge capacity, the initial efficiency, and the capacity retention rate, and thus a secondary battery containing the present active material as a battery negative electrode exhibits good charge-discharge characteristics.

Specifically, slurry containing the present active material and an organic binding agent and other components such as conductivity aids as needed is applied to a current collector copper foil in the form of a thin film, which can be a negative electrode. The negative electrode can also be produced by adding carbon materials such as graphite to the above slurry.

Examples of these carbon materials include natural graphite, artificial graphite, and amorphous carbon such as hard carbon and soft carbon.

The negative electrode can be obtained by kneading the present active material and a binder as an organic binding agent together with a solvent with a dispersion apparatus such as a stirrer, a ball mill, a super sand mill, or a pressure kneader to prepare negative electrode material slurry, which is then applied to a current collector to form a negative electrode layer, for example. It can also be obtained by forming the paste-like negative electrode material slurry into a sheet shape, a pellet shape, or the like and integrating it with the current collector.

Examples of the organic binding agent include styrene-butadiene rubber copolymers (hereinafter also referred to as "SBR"); unsaturated carboxylic acid copolymers such as (meth)acrylic copolymers containing ethylenically unsaturated carboxylic esters such as methyl (meth)acrylate, ethyl (meth)acrylate, butyl (meth)acrylate, (meth)acrylonitrile, and hydroxyethyl (meth)acrylate and ethylenically unsaturated carboxylic acids such as acrylic acid, methacrylic acid, itaconic acid, fumaric acid, and maleic acid; and polymer compounds such as polyvinylidene fluoride, polyethylene oxide, polyepichlorohydrin, polyphosphazene, polyacrylonitrile, polyimide, polyamideimide, and carboxymethylcellulose (hereinafter also referred to as "CMC").

These organic binding agents are dispersed or dissolved in water or dissolved in an organic solvent such as N-methyl-2-pyrrolidone (NMP) depending on their physical properties. The content ratio of the organic binding agent in a negative electrode layer of a lithium-ion secondary battery negative electrode is preferably 1% by mass to 30% by mass, more preferably 2% by mass to 20% by mass, and even more preferably 3% by mass to 15% by mass.

The content ratio of the organic binding agent being 1% by mass or more gives better adhesion and more inhibits the destruction of a negative electrode structure due to expansion and contraction during charging and discharging. On the other hand, being 30% by mass or less more inhibits an increase in electrode resistance.

In the range, the present active material is easy to handle in terms of practical implementation in that it has high chemical stability and can employ a water-based binder.

The negative electrode material slurry may be mixed with a conductivity aid as needed. Examples of the conductivity aid include carbon black, graphite, acetylene black, and oxides and nitrides exhibiting conductivity. The use amount of the conductivity aid may be about 1% by mass to 15% by mass with respect to the negative electrode active material according to the present invention.

As to the material and shape of the current collector, for example, a strip of copper, nickel, titanium, stainless steel, or the like formed into a foil shape, a perforated foil shape, a mesh shape, or the like may be used. Porous materials such as porous metal (foamed metal) and carbon paper can also be used.

Examples of the method for applying the negative electrode material slurry to the current collector include metal mask printing, electrostatic coating, dip coating, spray coating, roll coating, doctor blading, gravure coating, and screen printing. After the application, rolling treatment with a flat press, a calender roll, or the like is preferably performed as needed.

The negative electrode material slurry in sheet form, pellet form, or the like can be integrated with the current collector by, for example, rolling, pressing, or a combination of these methods.

The negative electrode layer formed on the current collector or the negative electrode layer integrated with the current collector is preferably heat treated in accordance with the used organic binding agent. For example, when a water-based styrene-butadiene rubber copolymer (SBR) or the like is used, heat treatment may be performed at 100 to 130°C, whereas when an organic binding agent with polyimide or polyamideimide as its main skeleton is used, heat treatment is preferably performed at 150 to 450°C.

This heat treatment advances removal of the solvent and higher strength due to the hardening of the binder, which can improve adhesion between particles and between the particles and the current collector. This heat treatment is preferably performed in an inert atmosphere such as helium, argon, or nitrogen or a vacuum atmosphere in order to prevent oxidation of the current collector during the treatment.

The negative electrode is preferably subjected to pressurization after the heat treatment. A negative electrode containing the present active material has an electrode density of preferably 1 g/cm³ to 1.8 g/cm³, more preferably 1.1 g/cm³ to 1.7 g/cm³, and even more preferably 1.2 g/cm³ to 1.6 g/cm³. As to the electrode density, higher density tends to improve adhesion and electrode volumetric capacity density. On the other hand, if the electrode density is too high, the number of voids in the electrode decreases, thereby weakening the effect of inhibiting volume expansion such as silicon, and the capacity retention rate may decrease. Thus, the optimal range of the electrode density is selected.

The secondary battery according to the present invention contains the present active material in the negative electrode. The secondary battery having the negative electrode containing the present active material is preferably a nonaqueous electrolyte secondary battery and a solid electrolyte secondary battery and exhibits excellent performance when used as the negative electrode of the nonaqueous electrolyte secondary battery in particular.

When used for a wet electrolyte secondary battery, for example, the secondary battery according to the present invention can be formed by placing a positive electrode and the negative electrode containing the negative electrode active material according to the present invention facing each other via a separator and injecting an electrolyte.

The positive electrode can be obtained by forming a positive electrode layer on the surface of a current collector, similarly to the negative electrode. For the current collector of this case, a strip of metal or alloy such as aluminum, titanium, or stainless steel formed into a foil shape, a perforated foil shape, a mesh shape, or the like can be used.

The positive electrode material for use in the positive electrode layer is not limited to a particular material. Among nonaqueous electrolyte secondary batteries, when a lithium-ion secondary battery is produced, metallic compounds, metal oxides, metal sulfides, or conductive polymer materials capable of doping or intercalating lithium ions may be used, for example. Examples thereof include lithium cobaltate (LiCoO₂), lithium nickelate (LiNiO₂), lithium manganate (LiMnO₂), their composite oxides (LiCoxNiyMnzO₂, x + y + z = 1), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine type LiMPO₄ (where M is Co, Ni, Mn, or Fe), conductive polymers such as polyacetylene, polyaniline, polypyrrole, polythiophene, and polyacene, and porous carbon, which can be used singly or in mixture.

As the separator, nonwoven fabrics, cloth, microporous films, or combinations thereof mainly made of polyolefins such as polyethylene and polypropylene can be used, for example. When a structure in which the positive electrode and the negative electrode of the nonaqueous electrolyte secondary battery to be produced are not in direct contact is employed, there is no need to use any separator.

As the electrolyte, for example, what is called an organic electrolyte can be used, in which a lithium salt such as LiClO₄, LiPF₆, LiAsF₆, LiBF₄, or LiSO₃CF₃ is dissolved in a nonaqueous solvent as a single body or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyl tetrahydrofuran, 1,3-dioxolane, methyl acetate, or ethyl acetate.

While the structure of the secondary battery according to the present invention is not limited to a particular structure, it is generally structured by winding the positive electrode, the negative electrode, and the separator, which is provided as needed, into a flat spiral shape to make a wound electrode plate group or stacking them into a flat plate shape to make a laminated electrode plate group and encapsulating these electrode plate groups in an outer casing. A half cell for use in the examples of the present invention mainly includes the present active material in its negative electrode, and simplified evaluation is performed with metallic lithium used for the counter electrode. This is for comparing the cycle characteristics of the active material itself more clearly.

The secondary battery containing the present active material is used as, with no particular limitations, paper batteries, button batteries, coin batteries, laminated batteries, cylindrical batteries, square batteries, and the like. The negative electrode active material according to the present invention described above can also be applied to electrochemical apparatuses in general using insertion and desorption of lithium ions as a charge-discharge mechanism, such as hybrid capacitors and solid lithium secondary batteries.

The present active material can be produced by a method including, for example, Steps 1 to 4 below. The following steps exemplify a method using a polysiloxane compound and a carbon source resin as the silicon-containing compound serving as the matrix phase, but these methods are not limiting.

Step 1: Wet-pulverized silicon (zero-valent) slurry is mixed with an aggregate containing the polysiloxane compound and the carbon source resin to obtain a suspension liquid.

Step 2: A salt of at least one metal selected from the group consisting of Li, K, Na, Ca, Mg, and Al is added to the obtained suspension liquid to be mixed therewith, and then the solvent is removed to obtain a precursor.

Step 3: The precursor obtained in Step 2 above is fired in an inert atmosphere at a maximum attainable temperature in a temperature range of 1,000°C to 1,180°C to obtain a fired product.

Step 4: The fired product obtained in Step 3 above is pulverized to obtain the present active material.

The following describes the steps.

### <Step 1>

### (Silicon (Zero-Valent) Slurry)

Preparation of the wet-pulverized silicon (zero-valent) slurry used in Step 1 can be performed while silicon particles are pulverized with a wet powder pulverizing apparatus using an organic solvent. A dispersant may be used in order to promote the pulverization of the silicon particles in the organic solvent. The wet pulverizing apparatus is not limited to a particular apparatus. Examples thereof include roller mills, high-speed rotary pulverizers, container-driven mills, and bead mills.

In wet pulverization, the silicon particles are preferably pulverized until they reach the particle size of the present silicon particles.

Examples of the organic solvent used in the wet process include organic solvents that do not chemically react with silicon. Examples thereof include acetone, methyl ethyl ketone, methyl isobutyl ketone, and diisobutyl ketone as ketones; ethanol, methanol, normal propyl alcohol, and isopropyl alcohol as alcohols; and benzene, toluene, and xylene as aromatics.

Examples of the type of the dispersant include aqueous and nonaqueous dispersants. The use of the nonaqueous dispersant is preferred in order to inhibit excessive oxidation to the surfaces of the present silicon particles. Examples of the type of the nonaqueous dispersant include a polymeric type such as polyether-based, polyalkylene polyamine-based, and polycarboxylic acid partial alkyl ester-based ones, a low molecular type such as polyhydric alcohol ester-based and alkyl polyamine-based ones, and an inorganic type such as polyphosphate-based one. The concentration of silicon in the silicon (zero-valent) slurry is not limited to a particular concentration, but the amount of silicon is preferably in a range of 5% by mass to 40% by mass and more preferably 10% by mass to 30% by mass with the total amount of the solvent, the dispersant, if the dispersant is contained as needed, and silicon as 100% by mass.

### (Polysiloxane Compound)

The polysiloxane compound used in Step 1 is a resin containing at least one of a polycarbosilane structure, a polysilazane structure, a polysilane structure, and a polysiloxane structure. The polysiloxane compound may be a resin containing only these structures or a composite resin having at least one of these structures as a segment and chemically bonding with another polymer segment. Examples of the form of combination include graft copolymerization, block copolymerization, random copolymerization, and alternating copolymerization. Examples thereof include a composite resin having a graft structure chemically bonding with a polysiloxane segment and a side chain of the polymer segment and a composite resin having a block structure in which the polysiloxane segment chemically bonds with the end of the polymer segment.

The polysiloxane segment preferably has a structural unit represented by General Formula (S-1) below and/or General Formula (S-2) below. Among them, the polysiloxane compound more preferably has a carboxy group, an epoxy group, an amino group, or a polyether group on the side chain or the end of a siloxane bond (Si-O-Si) main skeleton.

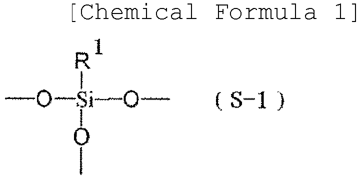

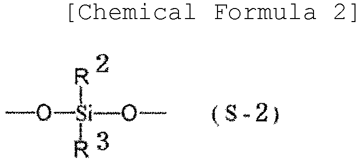

(In General Formulae (S-1) and (S-2) above, R¹ represents an aromatic hydrocarbon group or an alkyl group that may have a substituent, an epoxy group, a carboxy group, or the like. R² and R³ each indicate an alkyl group, a cycloalkyl group, an aryl group, an aralkyl group, an epoxy group, a carboxy group, or the like.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group. Examples of the cycloalkyl group include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the polymer segment that the polysiloxane compound has, other than the polysiloxane segment, include polymer segments such as vinyl polymer segments such as acrylic polymers, fluoro olefin polymers, vinyl ester polymers, aromatic vinyl polymers, and polyolefin polymers, polyurethane polymer segments, polyester polymer segments, and polyether polymer segments. Among them, vinyl polymer segments are preferred.

The polysiloxane compound may be a composite resin in which the polysiloxane segment and the polymer segment bond with each other in the structure shown by Structural Formula (S-3) below and may have a three-dimensional reticulate polysiloxane structure.

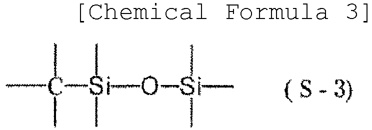

(In the formula, the carbon atom is a carbon atom forming the polymer segment, and the two silicon atoms are silicon atoms forming the polysiloxane segment.)

The polysiloxane segment of the polysiloxane compound may have a functional group in the polysiloxane segment that can react upon heating, such as a polymerizable double bond. Heat treatment on the polysiloxane compound prior to thermal decomposition allows a cross-linking reaction to proceed, making it solid, which can facilitate thermal decomposition treatment.

Examples of the polymerizable double bond include a vinyl group and a (meth)acryloyl group. Two or more polymerizable double bonds are preferably present in the polysiloxane segment, 3 to 200 are more preferably present, and 3 to 50 are even more preferably present. By using a composite resin with two or more polymerizable double bonds as the polysiloxane compound, a cross-linking reaction can be easily caused to proceed.

The polysiloxane segment may have a silanol group and/or a hydrolyzable silyl group. Examples of a hydrolyzable group in the hydrolyzable silyl group include halogen atoms, an alkoxy group, a substituted alkoxy group, an acyloxy group, a phenoxy group, a mercapto group, an amino group, an amide group, an aminooxy group, an iminooxy group, and an alkenyloxy group. These groups are hydrolyzed, whereby the hydrolyzable silyl group become a silanol group. In parallel with the thermosetting reaction, a hydrolytic condensation reaction proceeds between the hydroxy group in the silanol group and the hydrolyzable group in the hydrolyzable silyl group to obtain a solid polysiloxane compound.

The silanol group referred to in the present invention is a silicon-containing group having a hydroxy group directly bonding with the silicon atom. The hydrolyzable silyl group referred to in the present invention is a silicon-containing group having a hydrolyzable group directly bonding with the silicon atom. Specific examples thereof include a group represented by General Formula (S-4) below.

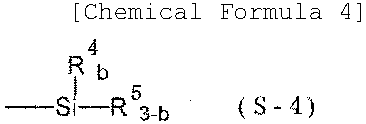

(In the formula, R⁴ is a monovalent organic group such as an alkyl group, an aryl group, or an aralkyl group, and R⁵ is a halogen atom, an alkoxy group, an acyloxy group, an allyloxy group, a mercapto group, an amino group, an amide group, an aminooxy group, an iminooxy group, or an alkenyloxy group, in which b is an integer of 0 to 2.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the halogen atom include a fluorine atom, a chlorine atom, a bromine atom, and an iodine atom.

Examples of the alkoxy group include a methoxy group, an ethoxy group, a propoxy group, an isopropoxy group, a butoxy group, a secondary butoxy group, and a tertiary butoxy group.

Examples of the acyloxy group include a formyloxy group, an acetoxy group, a propanoyloxy group, a butanoyloxy group, a pivaloyloxy group, a pentanoyloxy group, a phenylacetoxy group, an acetoacetoxy group, a benzoyloxy group, and a naphthoyloxy group.

Examples of the allyloxy group include a phenyloxy group and a naphthyloxy group.

Examples of the alkenyloxy group include a vinyloxy group, an allyloxy group, a 1-propenyloxy group, an isopropenyloxy group, a 2-butenyloxy group, a 3-butenyloxy group, a 2-pentenyloxy group, a 3-methyl-3-butenyloxy group, and a 2-hexenyloxy group.

Examples of the polysiloxane segment having the structural units indicated by General Formula (S-1) above and/or General Formula (S-2) above include those having the following structures.

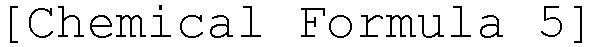

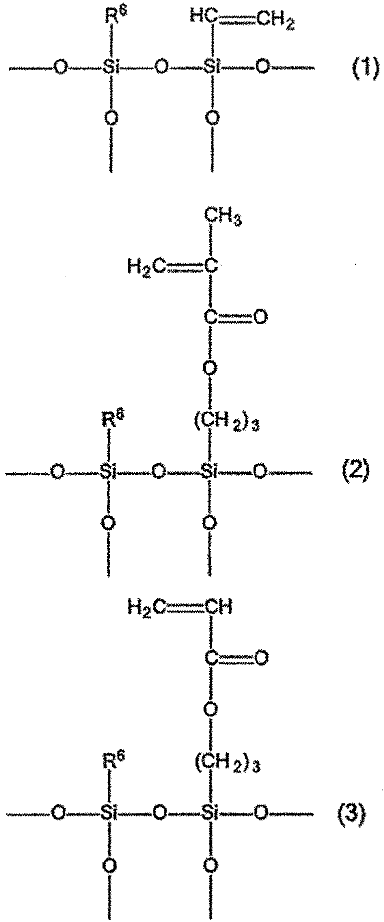

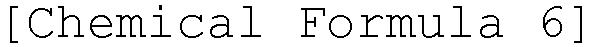

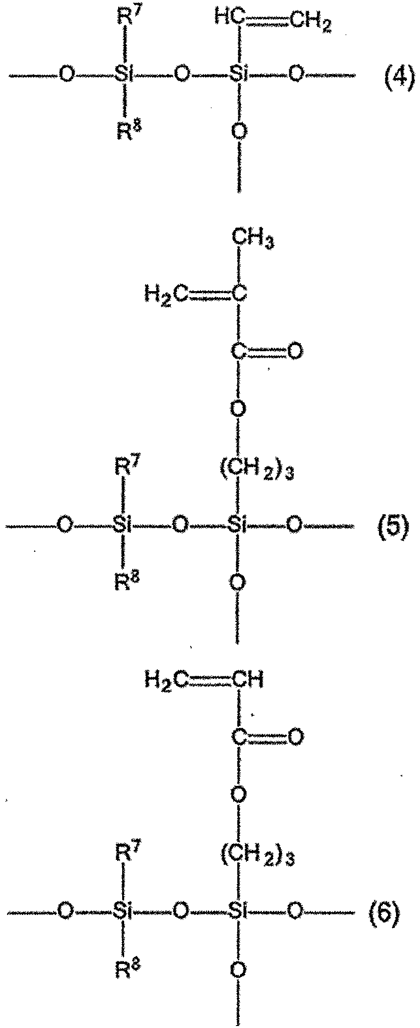

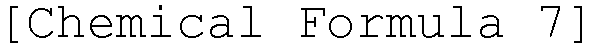

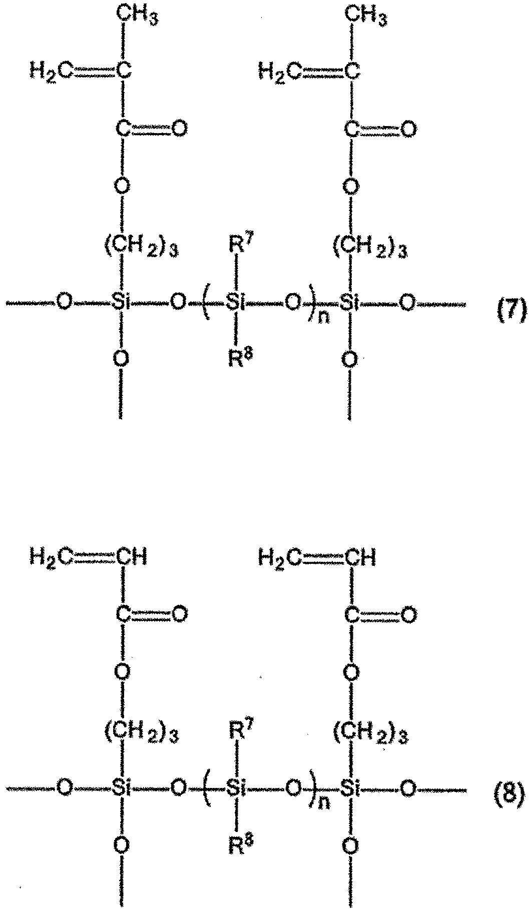

The polymer segment may have various functional groups as needed to the extent that they do not impair the advantageous effects of the present invention. Examples of such functional groups include a carboxy group, a blocked carboxy group, a carboxylic anhydride group, a tertiary amino group, a hydroxy group, a blocked hydroxy group, a cyclocarbonate group, an epoxy group, a carbonyl group, a primary amide group, a secondary amide group, a carbamate group, and a functional group represented by Structural Formula (S-5) below.

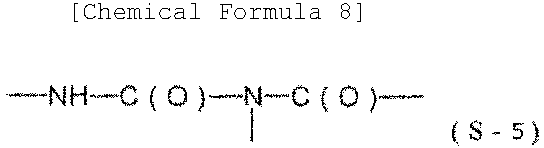

The polymer segment may also have a polymerizable double bond such as a vinyl group or a (meth)acryloyl group.

The polysiloxane compound is preferably produced by, for example, the methods shown in (1) to (3) below.

(1) A method of preparing a polymer segment containing a silanol group and/or a hydrolyzable silyl group as a raw material for the polymer segment in advance, mixing this polymer segment and a silane compound containing a silanol group and/or a hydrolyzable silyl group and a polymerizable double bond together, and performing a hydrolytic condensation reaction.
(2) This method prepares a polymer segment containing a silanol group and/or a hydrolyzable silyl group as a raw material for the polymer segment in advance. A silane compound containing a silanol group and/or a hydrolyzable silyl group and a polymerizable double bond is subjected to a hydrolytic condensation reaction to also prepare polysiloxane in advance. Then, the polymer segment and polysiloxane are mixed together, and a hydrolytic condensation reaction is performed.
(3) A method of mixing the polymer segment, a silane compound containing a silanol group and/or a hydrolyzable silyl group and a polymerizable double bond, and polysiloxane together and performing a hydrolytic condensation reaction.

The polysiloxane compound is obtained by the methods described above.

Examples of the polysiloxane compound include the CERANATE (registered trademark) series (organic/inorganic hybrid coating resin; manufactured by DIC Corporation) and the COMPOCERAN SQ series (silsesquioxane-type hybrid; manufactured by Arakawa Chemical Industries, Ltd.).

### (Carbon Source Resin)

For the carbon source resin used in Step 1 above, synthetic resins having aromatic functional groups as well as natural raw materials or the like having good miscibility with the polysiloxane compound and are carbonized by high-temperature firing in an inert atmosphere are preferably used.

Examples of the synthetic resins include thermoplastic resins such as polyvinyl alcohol and polyacrylic acid and thermosetting resins such as phenolic resins and furan resins. Examples of the natural chemical raw materials include heavy oils, especially tar pitches such as coal tar, tar light oil, tar medium oil, tar heavy oil, naphthalene oil, anthracene oil, coal tar pitch, pitch oil, mesophase pitch, oxygen cross-linked petroleum pitch, and heavy oil. From the viewpoint of availability at low prices and exclusion of impurities, phenolic resins are more preferably used.

In particular, in Step 1 above, the carbon source resin is preferably a resin containing an aromatic hydrocarbon moiety, and the resin containing an aromatic hydrocarbon moiety is preferably a phenolic resin, an epoxy resin, or a thermosetting resin, with the phenolic resin being preferably a resol type one.

Examples of the phenolic resin include the Sumilite Resin series (resol type phenolic resin, manufactured by Sumitomo Bakelite Co., Ltd.).

### <Step 2>

Examples of the salt of at least one metal selected from the group consisting of Li, K, Na, Ca, Mg, and Al used in Step 2 above (hereinafter referred to as the "present metal salt") include halides such as fluorides, chlorides, and bromides, hydroxides, and carbonates of these metals.

The present metal salt may be a salt of two or more metals, in which one salt may have a plurality of metals or it may be a mixture of salts having different metals.

The addition amount of the present metal salt when the present metal salt is added to the suspension liquid obtained in Step 1 above is not limited to a particular amount, and the molar ratio of the addition amount of the metal salt compound to the amount by mole of the entire amount of the silicon particles is preferably 0.01 to 0.4.

Examples of the method of mixing include a method of dissolving the metal salt in an organic solvent if it is soluble in the organic solvent and adding it to the suspension liquid to be mixed therewith. If the metal salt is insoluble in organic solvents, particles of the present metal salt may be dispersed in an organic solvent and then added to the suspension liquid to be mixed therewith. The metal salt is preferably nanoparticles with an average particle size of 100 nm or less from the viewpoint of improving a dispersion effect. As the organic solvent, alcohols, ketones, and the like are suitably used, and aromatic hydrocarbon-based solvents such as toluene, xylene, naphthalene, and methyl naphthalene can also be used.

### (Precursor)

The suspension liquid obtained in Step 1 above and the present metal salt are uniformly mixed together and stirred, and then after desolventing and drying, the precursor of the present active material (hereinafter also referred to as a "precursor") is obtained. The aggregate containing the polysiloxane compound and the carbon source resin is preferably in a state in which the polysiloxane compound and the carbon source resin are uniformly mixed together. The mixing is performed using an apparatus having dispersing and mixing functions. Examples of the apparatus include stirrers, ultrasonic mixers, and premix dispersion machines. In the desolventing and drying operations for the purpose of distilling off an organic solvent, dryers, vacuum dryers, spray dryers, or the like can be used.

The precursor preferably contains the present silicon particles as silicon (zero-valent) in an amount of 3% by mass to 50% by mass, the solid content of the polysiloxane compound in an amount of 15% by mass to 85% by mass, and the solid content of the carbon source resin in an amount of 3% by mass to 70% by mass and more preferably contains the content of the solid content of the present silicon particles in an amount of 8% by mass to 40% by mass, the solid content of the polysiloxane compound in an amount of 20 to 70% by mass, and the solid content of the carbon source resin in an amount of 3% by mass to 60% by mass.

Step 2 allows sufficient contact between the molecules of the present metal salt and the present silicon particles by uniformly dispersing the present metal salt in the suspension liquid. When silicon oxide is present on or around the surfaces of the present silicon particles, the present silicate compound can be present in the near-surface of the present silicon particles by bringing the molecules of the present metal salt and the present silicon particles into sufficient contact under the conditions in which the molecules of the present metal salt and the present silicon particles undergo a solid phase reaction. In order for the concentration of the present silicate compound in the near-surface of the present silicon particles to be higher than the concentration of the compound forming the matrix phase, it is important to improve the state of contact between the present metal salt and the present silicon particles.

The molecules of the present metal salt are surfacemodified using an organic additive and can be thereby attached to the near-surface of the present silicon particles. The molecular structure of the organic additive, which is not limited to a particular structure, is only required to form physical or chemical bonding with the dispersant present on the surfaces of the present silicon particle. Examples of the physical or chemical bonding include electrostatic action, hydrogen bonding, intermolecular van der Waals forces, ionic bonding, and covalent bonding. During high-temperature firing, the molecules of the present metal salt undergo a solid phase reaction with silicon oxide on the surfaces of the present silicon particles and can thereby cover the surfaces of the present silicon particles with the present silicate compound.

### <Step 3>

Step 3 is a step of firing the precursor obtained in Step 2 above within a temperature range of a highest attainable temperature of 900° to 1,200° in an inert atmosphere to completely decompose thermally decomposable organic components and to make the other main components into a fired product suitable for the present active material by the precise control of the firing conditions. Specifically, the polysiloxane compound and the carbon source resin as raw materials are converted to a siliconoxygen-carbon skeleton and free carbon by the energy of the high-temperature processing.

The firing is performed in line with a program of firing prescribed by a temperature rising rate, a retention time at a constant temperature, and the like. The highest attainable temperature is the highest temperature to be set and has a strong influence on the structure and performance of the composite active material for a secondary battery as the fired product. In the present invention, by setting the highest attainable temperature to a temperature of 900° to 1,200°, the microstructure of the active material for a secondary battery possessing the chemical bonding state of silicon and carbon can be precisely controlled, and the oxidation of the present silicon particles by extremely high-temperature firing can also be avoided, and thus excellent charge-discharge characteristics can be obtained.

While the method of firing is not limited to a particular method, a reaction apparatus having a heating function in an inert atmosphere may be used, and continuous or batch processing is possible. As to the apparatus for firing, fluidized bed reactors, rotary furnaces, vertical moving bed reactors, tunnel furnaces, batch furnaces, rotary kilns, or the like can be selected as appropriate in accordance with the purpose.

### <Step 4>

Step 4 is a step of pulverizing the fired product obtained in Step 3 above and performing classification as needed to obtain the present active material. Pulverization may be performed in one step or performed in several steps for a desired particle size. For example, when the active material of 10 um is produced from the fired product in a lump or agglomerated particles of 10 mm or more, coarse pulverization is performed with a jaw crusher, a roll crusher, or the like to make particles of about 1 mm, which are then made to be 100 um with a glow mill, a ball mill, or the like, which are then pulverized to about 10 µm with a bead mill, a jet mill, or the like. To remove coarse particles that may be contained in the particles produced by pulverization or when fine particles are removed to adjust particle size distribution, classification is performed. The classifier used is a wind power classifier, a wet classifier, or the like, which varies in accordance with the purpose. In removing coarse particles, a method of classification including sifting is preferred because it can surely achieve the purpose. If a precursor mixture is controlled to a shape near the target particle size by spray drying or the like prior to the firing, and the firing is performed in that shape, the pulverization step can be omitted.

When the present silicon particles have the silicon dioxide, the surfaces of the present silicon particles can be oxidized to form a silicon dioxide film in the process of desolventing and drying in Step 2 above and the process of Step 3 above.

As described above, when the present active material is made into the negative electrode active material of a secondary battery, it gives a secondary battery excellent in the initial coulombic efficiency and the capacity retention rate.

The present active material can be used as the negative electrode by the above method and can be made into a secondary battery having the negative electrode.

The above has described the present active material and the secondary battery containing the present active material in the negative electrode, but the present invention is not limited to the configuration of the embodiment.

For the present active material and the secondary battery containing the present active material in the negative electrode, any other configurations may be added to the configuration of the embodiment, or the configuration may be replaced with any configurations performing similar functions.

### [Examples]

The following describes the present invention in detail by means of examples, but the present invention is not limited to these examples.

A half cell for use in the examples of the present invention mainly includes the silicon-containing active material according to the present invention in its negative electrode, and simplified evaluation is performed with metallic lithium used for the counter electrode. This is for comparing the cycle characteristics of the active material itself more clearly.

### Synthesis Example 1: Production of Silicon Particles

Zirconia beads with a particle size of 0.1 mm to 0.2 mm and 100 ml of methyl ethyl ketone solvent (MEK) were put into a container of a 150 ml small-sized bead mill apparatus with a filling rate of 60%. Subsequently, silicon powder (a commercially available product) with an average particle size of 5 um and a cationic dispersant liquid (BYK-Chemie Japan K.K.: BYK145) were added thereto, and the mixture was subjected to bead mill wet pulverization under the conditions described in Table 1 to obtain a dark brown, liquid silicon slurry with a solid concentration of 30% by mass. The morphology and size of the silicon pulverized product were confirmed by TEM observation, and they were designated as Si1, Si2, Si3, Si4, and Si5 as listed in Table 1.

**[Table 1]**

| | Presence or absence of dispersant | Dispersant/Si weight ratio | Beads particle size mm | Beads/Si weight ratio | Number of revolutions | Pulverization | Si average particle size D50 (nm) | Si particle shape |
|---|---|---|---|---|---|---|---|---|
| | | | | | (revolutions/ minute) | Time h | | |
| Si1 | Present | 1/10 | 0.2 | 2/1 | 1,300 | 4 | 125 | Flake |
| Si2 | Present | 1/7 | 0.2 | 2/1 | 1,400 | 4 | 85 | Flake |
| Si3 | Present | 1/5 | 0.2 | 2/1 | 1,500 | 4 | 56 | Flake |
| Si4 | Present | 1/5 | 0.2 | 2/1 | 1,500 | 6 | 45 | Flake |
| Si5 | Absent | - | 0.2 | 2/1 | 1,500 | 2 | 250 | Bulk particle |

### Synthesis Example 2: Production of Polysiloxane Compound

### (Synthesis of Condensate (a1) of Methyltrimethoxysilane)

Methyltrimethoxysilane (hereinafter abbreviated as "MTMS") in 1,421 parts by mass was charged into a reaction vessel including a stirrer, a thermometer, a dropping funnel, a cooling tube, and a nitrogen gas inlet, and the temperature thereof was raised up to 60°C. Next, to the reaction vessel, a mixture of 0.17 part by mass of iso-propyl acid phosphate ("Phoslex A-3" manufactured by SC Organic Chemical Co., Ltd.) and 207 parts by mass of deionized water was added dropwise over 5 minutes, and then the mixture was stirred at a temperature of 80°C for 4 hours to be caused to undergo a hydrolytic condensation reaction.

The condensate obtained by the hydrolytic condensation reaction was distilled at a temperature from 40 to 60°C and under reduced pressure from 40 to 1.3 kPa. The term "under reduced pressure from 40 to 1.3 kPa" means that the reduced pressure condition at the start of distilling off methanol is 40 kPa, which is reduced until the pressure is finally 1.3 kPa. The same applies also to the following description. By removing methanol and water produced in the above reaction process, 1,000 parts by mass of a liquid containing a condensate (a1) of MTMS with a number average molecular weight of 1, 000 to 5,000 was obtained. The effective component of the obtained liquid was 70% by mass.

The effective component is calculated by a value obtained by dividing a theoretical yield (parts by mass) when all methoxy groups of silane monomers such as MTMS have undergone the condensation reaction by an actual yield (parts by mass) after the condensation reaction [theoretical yield (parts by mass) when all methoxy groups of silane monomers have undergone condensation reaction/actual yield (parts by mass) after condensation reaction].

### (Production of Curable Resin Composition (1))

Into a reaction vessel including a stirrer, a thermometer, a dropping funnel, a cooling tube, and a nitrogen gas inlet, 150 parts by mass of butanol (hereinafter also referred to as "BuOH"), 105 parts by mass of phenyltrimethoxysilane (hereinafter also referred to as "PTMS"), and 277 parts by mass of dimethyldimethoxysilane (hereinafter also referred to as "DMDMS") were charged, and the temperature thereof was raised up to 80°C.

Next, at the same temperature, a mixture containing 21 parts by mass of methyl methacrylate (hereinafter also referred to as "MMA"), 4 parts by mass of butyl methacrylate (hereinafter also referred to as "BMA"), 3 parts by mass of butyric acid (hereinafter also referred to as "BA"), 2 parts by mass of methacryloyloxypropyltrimethoxysilane (hereinafter also referred to as "MPTS"), 3 parts by mass of BuOH, and 0.6 part by mass of butyl peroxy-2-ethylhexanoate (hereinafter also referred to as "TBPEH") was added dropwise to the reaction vessel over 6 hours. After completion of the dropwise addition, it was further reacted at the same temperature for 20 hours to obtain an organic solvent solution of a vinyl polymer (a2-1) with a number average molecular weight of 10,000 having a hydrolyzable silyl group.

Next, a mixture of 0.04 part by mass of iso-propyl acid phosphate ("Phoslex A-3" manufactured by SC Organic Chemical Co., Ltd.) and 112 parts by mass of deionized water was added dropwise over 5 minutes, and the mixture was further stirred at the same temperature for 10 hours to cause it to undergo a hydrolytic condensation reaction, thereby obtaining a liquid containing a composite resin in which a hydrolyzable silyl group having the vinyl polymer (a2-1), a hydrolyzable silyl group having polysiloxane derived from PTMS and DMDMS described above, and a silanol group bond with each other.

Next, to this liquid, 472 parts by mass of the condensate (a1) of MTMS obtained in Synthesis Example 2 and 80 parts by mass of deionized water were added, the mixture was stirred at the same temperature for 10 hours to cause it to undergo a hydrolytic condensation reaction, and produced methanol and water were removed by performing distillation under the same conditions as in Synthesis Example 1. Next, 250 parts by mass of BuOH was added thereto to obtain 1,000 parts by mass of a curable resin composition (1) with a nonvolatile content of 60.1% by mass.

### (Production of Curable Resin Composition (2))

Into a reaction vessel including a stirrer, a thermometer, a dropping funnel, a cooling tube, and a nitrogen gas inlet, 150 parts by mass of BuOH, 249 parts by mass of PTMS, and 263 parts by mass of DMDMS were charged, and the temperature thereof was raised up to 80°C.

Next, at the same temperature, a mixture containing 18 parts by mass of MMA, 14 parts by mass of BMA, 7 parts by mass of BA, 1 part by mass of acrylic acid (hereinafter also referred to as "AA"), 2 parts by mass of MPTS, 6 parts by mass of BuOH, and 0.9 part by mass of TBPEH was added dropwise to the reaction vessel over 5 hours. After completion of the dropwise addition, it was further reacted at the same temperature for 10 hours to obtain an organic solvent solution of a vinyl polymer (a2-2) with a number average molecular weight of 20,100 having a hydrolyzable silyl group.

Next, a mixture of 0.05 part by mass of iso-propyl acid phosphate ("Phoslex A-3" manufactured by SC Organic Chemical Co., Ltd.) and 147 parts by mass of deionized water was added dropwise over 5 minutes, and the mixture was further stirred at the same temperature for 10 hours to cause it to undergo a hydrolytic condensation reaction, thereby obtaining a liquid containing a composite resin in which a hydrolyzable silyl group having the vinyl polymer (a2-2), a hydrolyzable silyl group having polysiloxane derived from PTMS and DMDMS described above, and a silanol group bond with each other.

Next, to this liquid, 76 parts by mass of 3-glycidoxytrimethoxysilane, 231 parts by mass of the condensate (a1) of MTMS obtained in Synthesis Example 2, and 56 parts by mass of deionized water were added, the mixture was stirred at the same temperature for 15 hours to cause it to undergo a hydrolytic condensation reaction, and produced methanol and water were removed by performing distillation under the same conditions as in Synthesis Example 1. Next, 250 parts by mass of BuOH was added to obtain 1,000 parts by mass of a curable resin composition (2) with a nonvolatile content of 60.0% by mass.

### Example 1

The polysiloxane resin with an average molecular weight of 3,500 produced in Synthesis Example 2 above (the curable resin composition (1)) and a phenolic resin with an average molecular weight of 3,000 were added in a resin solid content weight ratio of 45/55, and the Si3 silicon slurry obtained in Synthesis Example 1 and an appropriate amount of methyl ethyl ketone solvent were added thereto such that the silicon particle content in the product after high-temperature firing was 50% by mass, and the mixture was thoroughly mixed in a stirrer. Consequently, a mixed suspension liquid of a silicon particle-containing resin with a solid concentration of 10% by mass was obtained. MgCl₂ as a raw material was added to the mixed suspension liquid of a silicon particle-containing resin such that Mg²⁺/Si (molar ratio) = 2.5/100 with respect to the amount of the silicon particles, and after thorough mixing, desolventing was performed under a nitrogen flow condition in an oil bath at 120°C.

Subsequently, vacuum drying was performed at 110°C for 10 hours using a vacuum dryer, and finally high-temperature firing was performed in a nitrogen atmosphere at 1,100°C for 4 hours to obtain composite particles as a black solid. The composite particles were pulverized with a planetary ball mill to produce active material composite particles.

The obtained active material composite particles had a D50 of about 5.5 um and a specific surface area of 3.6 m²/g. The silicon crystallite size was determined by the Scherrer equation based on the FWHM of a diffraction peak (20 = 28.4°) attributed to the Si (111) crystal plane based on a measurement result of powder X-ray diffraction (XRD) using the Cu-Kα line. The silicon crystallite size was 21 nm.

²⁹Si-NMR (manufactured by JEOL RESONANCE Inc.) spectral measurement showed that the area ratio of the peak around - 85 ppm attributed to an MgSiO₃ structure to the peak around -110 ppm attributed to an SiO₂ structure was 10/90. A highresolution transmission electron microscopy (HR-TEM) observation result revealed that the thickness of an MgSiO₃ layer on the surfaces of the silicon particles was about 0.8 nm, and there was no crystalline lattice structure estimated to be MgSiO₃ in the matrix phase away from the silicon particles. An energy dispersive X-ray spectroscopy (EDS) result showed that the elemental composition ratio of the matrix phase after excluding the addition amount of the silicon particles was SiO_{1.7}C_{5.6}N_{0.1}.

The active material composite particles obtained above in an amount of 80 parts by mass, 10 parts by mass of acetylene black as a conductive aid, and 10 parts by mass of a mixture of CMC and SBR as a binder were mixed together to prepare a slurry. The obtained slurry was formed as a film on copper foil. After being dried under reduced pressure at 110°C, a coin type lithium-ion battery was produced as a half cell with Li metal foil as a counter electrode. The charge-discharge characteristics of the produced half cell were evaluated using a secondary battery charge-discharge tester (manufactured by Hokuto Corporation). The cutoff voltage range was set to 0.005 to 1.5 V. The charge-discharge measurement results showed an initial discharge capacity of 1,545 mAh/g and an initial coulombic efficiency of 85%.

For the evaluation of a full cell, a positive electrode film was produced using a single-layer sheet including, as positive electrode materials, LiCoO₂ as a positive electrode active material and an aluminum foil as a current collector, and a negative electrode film was produced by mixing graphite powder and the active material powder at a designed discharge capacity value of 450 mAh/g. Using a nonaqueous electrolyte solution in which lithium hexafluorophosphate was dissolved in a 1/1 mixed liquid of ethylene carbonate and diethyl carbonate in terms of volume ratio at a concentration of 1 mol/L as a nonaqueous electrolyte, a laminated lithium-ion secondary battery including a 30 umthick polyethylene microporous film as a separator was produced. The laminated lithium-ion secondary battery was charged under room temperature at a constant current of 1.2 mA (0.25c based on the positive electrode) until the test cell voltage reached 4.2 V, and after reaching 4.2 V, charging was performed with the current decreased so as to keep the cell voltage at 4.2 V to determine discharge capacity. The capacity retention rate after 100 cycles at 45°C was 91%. Table 2 lists the results.

### Examples 2 to 5

MgCl₂ as a raw material was added to the mixed suspension liquid of a silicon particle-containing resin such that Mg²⁺/Si (molar ratio) = 4.0/100 (Example 2), 5.5/100 (Example 3), 7.5/100 (Example 4), and 12/100 (Example 5) with respect to the amount of the silicon particles. Active material composite particles were obtained with the other conditions being the same as in Example 1. Each secondary battery containing a negative electrode active material containing the obtained active material composite particles was evaluated. Table 2 lists the results.

### Example 6

Active material composite particles were obtained with the precursor production condition and the like being the same as in Example 5, with the firing temperature set to 1,180°C. A secondary battery containing a negative electrode active material containing the obtained active material composite particles was evaluated. Table 2 lists the results.

### Examples 7 and 8

LiCl was used as a raw material for the silicate compound instead of MgCl₂. LiCl was added to the mixed suspension liquid of a silicon particle-containing resin with Li⁺/Si(molar ratio) of 10/100 (Example 7) and 24/100 (Example 8) with respect to the amount of the silicon particles, and the firing temperature was set to 1,000°C. Active material composite particles were obtained with the other conditions being the same as in Example 1. Each secondary battery containing a negative electrode active material containing the obtained active material composite particles was evaluated. Table 2 lists the results.

### Examples 9 to 11

The weight ratio, in terms of resin solid, of the polysiloxane resin with an average molecular weight of 3,500 produced in the same manner as in Synthesis Example 2 above (the curable resin composition (2)) to a phenolic resin with an average molecular weight of 3,000 was set to 10/90 (Example 9), 20/80 (Example 10), and 80/20 (Example 11). With the addition amount of MgCl₂ giving Mg²⁺/Si (molar ratio) of 7.5/100 with respect to the amount of the silicon particles as in Example 4, the MgCl₂ raw material was added to the mixed suspension liquid of a silicon particle-containing resin. Active material composite particles were obtained with the other conditions being the same as in Example 1. Each secondary battery containing a negative electrode active material containing the obtained active material composite particles was evaluated. Table 2 lists the results.

### Examples 12 to 14

The silicon particles in the mixed suspension liquid of a silicon particle-containing resin described in Example 1 were replaced with the silicon particles Si4 (Example 12), Si2 (Example 13), and Si1 (Example 14) obtained in Synthesis Example 1 with the other conditions being the same as in Example 1 to obtain active material composite particles. Each secondary battery containing a negative electrode active material containing the obtained active material composite particles was evaluated. Table 2 lists the results.

### Example 15

In the same manner as in Example 4 except that the addition amount of MgCl₂ was set such that Mg²⁺/Si (molar ratio) was 2.0/100 with respect to the amount of the silicon particles, active material composite particles were obtained. A secondary battery containing a negative electrode active material containing the obtained active material composite particles was evaluated. Table 2 lists the results.

### Example 16

Using commercially available silicon particles (manufactured by Alfa Aesar, 50 nm) and pitch (a carbon source), a mixed suspension liquid of a silicon particle-containing resin was prepared such that the content of silicon particles was 50% by weight after high-temperature firing. Active material composite particles were obtained with the other conditions being the same as in Example 1. A secondary battery containing a negative electrode active material containing the obtained active material composite particles was evaluated. Table 2 lists the results.

### Comparative Example 1

Without adding a compound of Li⁺ or Mg²⁺ as a silicate compound, with the other conditions being the same as in Example 1, a precursor dry product was prepared and was fired in a nitrogen atmosphere at 1,100°C for 4 hours to obtain active material powder. D50 of the active material powder was about 5.4 um and the specific surface area thereof was 4.1 m²/g. The charge-discharge measurement results showed a charge-discharge capacity of 1,935 mAh/g, a discharge capacity of 1,587 mAh/g, and an initial efficiency of 80.1% for the half cell and a capacity retention rate after 100 cycles for the full cell at 45°C of 90%.

### Comparative Example 2

A precursor was produced using the silicon particles Si5 of Synthesis Example 1 for the mixed suspension liquid of a silicon particle-containing resin. Active material composite particles were obtained with the other conditions being the same as in Example 1. A secondary battery containing a negative electrode active material containing the obtained active material composite particles was evaluated. Table 2 lists the results.

**[Table 2]**

| | Si average particle size nm | Silicate/ SiO₂ (molar ratio) | MgSiO₃ thickness (nm) | Li₂SiO₃ thickness (nm) | SiOₓC_{y}N_{z} | Si (111) crystallite (nm) | Active material particle size D50 (µm) | Active material specific surface area m²/g | Charge capacity mAh/g | Discharge capacity mAh/g | Initial coulombic efficiency (%) | Capacity retention rate @100 times |
|---|---|---|---|---|---|---|---|---|---|---|---|---|
| Ex. 1 | 56 | 10/90 | 0.8 | - | SiO_{1.7}C_{5.6}N_{0.1} | 21 | 5.5 | 3.6 | 1,818 | 1,545 | 85.0% | 91% |
| Ex. 2 | 56 | 23/77 | 1.5 | - | SiO_{1.7}C_{5.6}N_{0.1} | 21 | 5.6 | 3.7 | 1,803 | 1,540 | 85.4% | 91% |
| Ex. 3 | 56 | 52/48 | 3.4 | - | SiO_{1.7}C_{5.6}N_{0.1} | 21 | 5.5 | 4.2 | 1,727 | 1,509 | 87.4% | 92% |
| Ex. 4 | 56 | 75/25 | 4.3 | - | SiO_{1.7}C_{5.6}N_{0.1} | 21 | 5.9 | 3.4 | 1,684 | 1,489 | 88.4% | 92% |
| Ex. 5 | 56 | 100/0 | 5.1 | - | SiO_{1.7}C_{5.6}N_{0.1} | 21 | 5.4 | 3.6 | 1,631 | 1,468 | 90.0% | 93% |
| Ex. 6 | 56 | 100/0 | 9.1 | - | SiO_{1.7}C_{5.6}N_{0.1} | 21 | 5.1 | 3.9 | 1,617 | 1,408 | 87.1% | 95% |
| Ex. 7 | 56 | 35/65 | - | 3.1 | SiO_{1.7}C_{5.6}N_{0.1} | 21 | 5.4 | 3.6 | 1,749 | 1,518 | 86.8% | 92% |
| Ex. 8 | 56 | 100/0 | - | 5.5 | SiO_{1.7}C_{5.6}N_{0.1} | 21 | 5.5 | 3.9 | 1,644 | 1,476 | 89.8% | 94% |
| Ex. 9 | 56 | 75/25 | 4.3 | - | SiO_{1.2}C_{17.1}N_{0.3} | 21 | 1.3 | 21.3 | 1,548 | 1,378 | 89.0% | 89% |
| Ex. 10 | 56 | 75/25 | 4.3 | - | SiO_{1.4}C_{9.6}N_{0.2} | 21 | 5.8 | 4.5 | 1,615 | 1,418 | 87 . 8% | 92% |
| Ex. 11 | 56 | 75/25 | 4.3 | - | SiO_{1.6}C_{1.5} | 21 | 13.8 | 2.7 | 1,876 | 1,630 | 86. 9% | 91% |
| Ex. 12 | 45 | 75/25 | 4.1 | - | SiO_{1.7}C_{5.6}N_{0.1} | 18 | 4.8 | 3.1 | 1,717 | 1,490 | 86.8% | 92% |
| Ex. 13 | 85 | 75/25 | 4.6 | - | SiO_{1.7}C_{5.6}N_{0.1} | 25 | 5.9 | 7.1 | 1,725 | 1,535 | 89.0% | 90% |
| Ex. 14 | 125 | 75/25 | 4.9 | - | SiO_{1.7}C_{5.6}N_{0.1} | 32 | 7.2 | 13.5 | 1,753 | 1,560 | 89.0% | 85% |
| Ex. 15 | 56 | 5/95 | 0.2 | - | SiO_{1.7}C_{5.6}N_{0.1} | 21 | 5.6 | 7.6 | 1,850 | 1,550 | 83.8% | 90% |
| Ex. | 50 | 10/90 | 0.8 | - | CO_{0.1}N_{0.1} | 26 | 5.5 | 5.9 | 1,760 | 1,510 | 84 . 8% | 88% |
| 16 | | | | | | | | | | | | |
| Comp. Ex. 1 | 56 | 0/100 | 0 | - | SiO_{1.7}C_{5.6}N_{0.1} | 21 | 5.4 | 4.1 | 1,981 | 1,587 | 80.1% | 90% |
| Comp. Ex. 2 | 250 | 10/90 | 0.8 | - | SiO_{1.7}C_{5.6} | 45 | 5.6 | 6.1 | 1,889 | 1,600 | 84.7% | 80% |

### [Methods of Evaluation]

In Table 2, the methods of evaluation are as follows:
D50: It was measured using a laser diffraction particle size distribution measurement apparatus (Mastersizer 3000 manufactured by Malvern Panalytical Ltd.).

Specific surface area: It was measured by the BET method by nitrogen adsorption measurement using a specific surface area measurement apparatus (BELSORP-mini manufactured by BELJAPAN). ²⁹Si-NMR: JNM-ECA600 manufactured by JEOL RESONANCE Inc. was used.

Battery characteristics evaluation: Battery characteristics were measured using a secondary battery charge-discharge tester (manufactured by Hokuto Denko Corporation). Evaluation tests of charge-discharge characteristics were conducted at room temperature of 25°C, with a cutoff voltage range of 0.005 to 1.5 V and a charge-discharge rate of 0.1 C (the first to third times) and 0.2 C (the fourth cycle and later), and under a setting condition of constant-current and constant-voltage charging/constant-current discharging. At the time of switching between each charging and discharging, the half battery was left at rest in an open circuit for 30 minutes. Initial coulombic efficiency and cycle characteristics (indicating a capacity retention rate at 100 cycles in the present application) were determined as follows. Initial (coulombic) efficiency = initial discharge capacity (mAh/g)/initial charge capacity (mAh/g) capacity retention rate (%@100th) = 100th discharge capacity (mAh/g)/initial discharge capacity (mAh/g)

As is clear from the above results, when the present active material is used as the negative electrode active material, the initial coulombic efficiency is 83% or higher and the capacity retention rate is 85% or higher, which are high as a whole, and the balance of these secondary battery characteristics is excellent. The secondary battery containing the present active material as the negative electrode active material is excellent in its battery characteristics.

## Claims

1. A composite active material for a secondary battery, the composite active material comprising:
silicon particles with an average particle size of 150 nm or less;
a matrix phase in which the silicon particles are dispersed; and
a silicate compound of at least one metal selected from the group consisting of Li, K, Na, Ca, Mg, and Al,
the composite active material having the silicate compound in a near-surface of the silicon particles.

2. The composite active material for a secondary battery according to claim 1, wherein a silicate concentration in the near-surface of the silicon particles is higher than a silicate concentration in the matrix phase.

3. The composite active material for a secondary battery according to claim 1 or 2, further comprising silicon dioxide in the near-surface of the silicon particles.

4. The composite active material for a secondary battery according to claim 3, wherein a molar ratio of the silicon dioxide is 0.9 or less with a total amount by mole of the silicate compound and the silicon dioxide as 1.

5. The composite active material for a secondary battery according to claim 1 or 2, wherein the silicate compound is a magnesium silicate compound.

6. The composite active material for a secondary battery according to claim 5, wherein the magnesium silicate compound in the near-surface of the silicon particles is a crystalline film with a thickness of 0.2 nm to 10 nm.

7. The composite active material for a secondary battery according to claim 1 or 2, wherein the matrix phase contains at least a compound represented by SiOxCyNz (where 1 ≤ x ≤ 2, 1 ≤ y ≤ 20, and 0 ≤ z ≤ 0.5).

8. The composite active material for a secondary battery according to claim 1 or 2, wherein
the silicon particles are flake-like crystals, and
a crystallite size obtained from a peak with 20 of 28.4° in an X-ray diffraction spectrum is 25 nm or less.

9. The composite active material for a secondary battery according to claim 1 or 2, wherein the composite active material has an average particle size of 1 um to 15 um and a specific surface area of 1 m²/g to 30 m²/g.

10. A secondary battery comprising the composite active material for a secondary battery according to claim 1 or 2 in a negative electrode.
